# EUROPÄISCHE PATENTSCHRIFT

(11) **EP 2 295 297 B1**
(45) Veröffentlichungstag und Bekanntmachung des Hinweises auf die Patenterteilung: **09.11.2011**
(21) Anmeldenummer: 10005928.6
(22) Anmeldetag: 09.06.2010
(51) Int. Cl.: B60R 19/24, F16B 21/07, F16B 21/08, F16B 5/06

(54) **Vorrichtung zur lagegenauen Montagepositionierung von mindestens zwei Bauteilen zueinander**
Device for precise fitting positioning of at least two components relative to one another
Dispositif de montage et de positionnement précis d'au moins deux pieces de construction l'une par rapport à l'autre.

(30) Priorität: 15.09.2009 DE 202009012422 U
(43) Veröffentlichungstag der Anmeldung: 16.03.2011
(73) Patentinhaber: Peguform GmbH, 79268 Bötzingen (DE)
(72) Erfinder: Zipfel, Rainer, 79206 Breisach (DE); Kotterer, Mike, 79367 Weisweil (DE); Zwigart, Mario, 79364 Malterdingen (DE); Borchard, Stefanie, 79232 Bötzingen (DE); Adler, Florian, 79291 Merdingen (DE)
(74) Vertreter: Patentanwälte Westphal, Mussgnug & Partner

(56) Entgegenhaltungen:
- WO-A1-2004/004291
- JP-A- 58 039 548
- JP-U- 59 171 208
- JP-U- 61 011 452

## Beschreibung

Die vorliegende Erfindung betrifft eine Vorrichtung zur lagegenauen Montagepositionierung von mindestens zwei Bauteilen zueinander mit den Merkmalen des Oberbegriffs des Anspruchs 1, wie aus dem Dokument JP 58 039548 A bekannt ist.

Aus der DE 10 2005 051 662 A1 ist eine Vorrichtung zum lagegenauen Befestigen eines Stoßfängers bekannt, wobei der Stoßfänger auf einen Führungszapfen eines Führungselements am Fahrzeugaufbau aufsteckbar ist und auf diesem vorzugsweise in Hochrichtung verstellbar ist, sodass eine definierte Fuge zwischen dem Scheinwerfer und dem Stoßfänger eingestellt werden kann.

In der DE 10 2006 032 597 A1 wird eine Befestigungsvorrichtung für ein Anbauteil eines Kraftfahrzeugs beschrieben, wobei zur Lagefixierung des Bauteils an einem anbaufesten Trägerteil Vorfixierungen über umbiegbare Laschen vorgesehen sind, die in einer Raststellung am Träger angebracht werden können. Auf diese Weise kann beispielsweise ein Bugteil eines Kraftfahrzeugs in mehrere Richtungen einstellbar gehalten werden, wobei eine Vorfixierung erreicht wird, mit der das zu befestigende Bauteil in der entsprechenden Position bis zur Fertigmontage gehalten wird.

Als wichtigstes Kriterium für den Montageprozess von Bauteilen für Kraftfahrzeuge wird allgemein gefordert, dass nach der Fertigmontage zwischen den einzelnen Bauteilen des Kraftfahrzeugs ein präziser Fugenverlauf vorhanden ist. Die Lagegenauigkeit der Bauteile zueinander kann dabei häufig erst nach fertiger Montage geprüft werden, was entsprechende Korrekturarbeiten erforderlich macht, wenn Ungenauigkeiten festgestellt werden und Nachjustierungen vorgenommen werden müssen. Aufgabe der Erfindung ist es eine Vorrichtung zur Positionierung eines Bauteils an einem Kraftfahrzeug zu schaffen, mit der es gelingt, das betreffende Bauteil lagegenau zu weiteren ortsfesten Fahrzeugbauteilen anzuordnen, um das Bauteil dann später in dieser Position fertig montieren zu können.

Gelöst wird die Aufgabe durch eine Vorrichtung mit den Merkmalen des Anspruchs 1. Weiterentwicklungen und vorteilhafte Ausgestaltungen der Vorrichtung sind Gegenstand der Unteransprüche.

Die mit der Erfindung erzielten Vorteile bestehen darin, dass das zu montierende Bauteil in einer genau definierten Position zu einem zweiten angrenzenden Fahrzeugbauteil fixiert werden kann. Dies ist besonders interessant für Fahrzeugbauteile im Frontendbereich, deren Montage üblicherweise bei geöffneter Motorhaube erfolgt, wobei jedoch nach der Montage eine genau definierte Fuge zwischen dem eingebauten Bauteil und der Motorhaube gefordert wird, was häufig erst durch aufwendiges Nachjustieren realisiert werden kann.

Die vorliegende Erfindung sieht nunmehr eine Vorrichtung vor, mit deren Hilfe ein entsprechendes Bauteil, wie z.B. eine Stoßfängerverkleidung, bei geschlossener Motorhaube durch Montage von vorne fugengenau positioniert werden kann. Anschließend kann die Motorhaube geöffnet werden und das Bauteil kann dann fertig montiert werden, ohne dass dabei die Gefahr besteht, dass sich das Bauteil wieder verschiebt und somit ein Nachjustieren erforderlich wird.

Um diese lagegenaue Montagepositionierung von mindestens zwei Bauteilen zueinander zu erreichen, ist an einem ersten Bauteil mindestens ein aus der Bauteilebene hervorstehendes stegförmiges, an seiner Oberkante Rasthaken aufweisendes Rastelement angeordnet. Dieses Rastelement besitzt die Form eines gleichschenkligen Trapezes, das an seiner Basis offen ist. Da das Rastelement nur über die Kopfseite des Trapezes mit dem Bauteil verbunden ist, sind die Schenkel frei über der Bauteiloberfläche angeordnet und können, da die Basis des Trapezes offen ist, beim Einführen in eine entsprechende Aufnahmeöffnung federnd zusammengedrückt werden. An seiner Oberkante besitzt das Rastelement Rasthaken, die mit entsprechenden Rastkanten in der Aufnahmeöffnung in Wirkverbindung treten. Am zweiten Bauteil ist eine entsprechende korrespondierende Aufnahmeöffnung angeordnet, die zwei parallel verlaufende Klemmleisten umfasst, zwischen die das Rastelement beim Einführen in die Aufnahmeöffnung mit seinen Schenkeln eingeklemmt werden kann. Gleichzeitig besitzen die Klemmleisten Rastkanten, die mit den an der Oberkante des Rastelementes angeordneten Rasthaken in Wirkverbindung treten. Die Klemmleisten erstrecken sich entlang der Längsseite der Aufnahmeöffnung und definieren somit die Breite der Aufnahmeöffnung. Auf den der Aufnahmeöffnung gegenüberliegenden Seiten der Klemmleisten sind im Bauteil Ausnehmungen vorgesehen, die ein federndes Nachgeben der brückenartig angeordneten Klemmleisten beim einführen des Rastelementes in Richtung dieser Ausnehmungen erlauben.

Somit ist sowohl das Rastelement als auch die entsprechende Rastöffnung federnd ausgeführt, was den Vorteil hat, dass die beiden Bauteile mit Hilfe dieser federnden Rastelemente positionsgenau zueinander angeordnet werden können, wobei die Federkraft der Rastelemente ausreicht, um die Bauteile zueinander zu fixieren. Diese Fixierung ist allerdings nicht starr, sondern ein korrigierendes Verschieben der Bauteile ist weiterhin möglich, sodass auf einfache Weise ein genauer Fugenverlauf eingestellt werden kann.

Die Lösungen, die im Stand der Technik zu finden sind, basieren in den meisten Fällen darauf, dass die Bauteile bei dieser Vormontage zueinander fest fixiert werden und mit Rastelementen oder sonstigen Befestigungseinrichtungen unverrückbar in dieser Position bis zur Fertigmontage gehalten werden. Der besondere Vorteil der vorliegenden Erfindung besteht nun darin, dass die beiden federnden Rastelemente nach der Vormontage ein weiteres Verschieben sowohl in Montagerichtung als auch zurück zulassen, sodass im Falle einer zu starken Annäherung an das zweite Bauteil eine Korrektur in die Ausgangrichtung möglich ist. Dabei ist die Federkraft der Rastelemente so eingestellt, dass diese Korrektur einen entsprechenden Kraftaufwand erfordert, sodass gewährleistet ist, dass die montagegenaue Positionierung der Bauteile zueinander trotz dieser Möglichkeiten zum Korrigieren lagefest ist.

Bei einer vorteilhaften Ausgestaltung der vorliegenden Erfindung wird das Verschieben der Bauteile gegeneinander oder zueinander zusätzlich dadurch erleichtert, dass die Klemmleiste entlang ihrer zur Aufnahmeöffnung weisenden Klemmseite einen Wulst aufweist, sodass die Schenkel des Rastelementes nicht über ihre gesamten seitlichen Flächen mit der Klemmleiste in Wirkverbindung sind, wodurch die Reibungskräfte weiter reduziert werden können und das Verschieben der Bauteile gegeneinander erleichtert wird.

Im Folgenden wird die vorliegende Erfindung anhand von Abbildungen ausführlich erläutert. Dabei zeigt
- Fig.1: eine perspektivische Darstellung eines Ausschnitts aus einem Bauteil mit Rastelement,
- Fig. 2: eine perspektivische Darstellung eines Ausschnittes aus einem Bauteil mit einer zum Rastelement aus Figur 1 korrespondierenden Aufnahmeöffnung,
- Fig. 3: die in den Figuren 1 und 2 gezeigten Ausschnitte im Montagezustand,
- Fig. 4a: eine Schnittdarstellung des Befestigungsprinzips vor der Montage und
- Fig. 4b: eine Schnittdarstellung des Befestigungsprinzips nach der Montage.

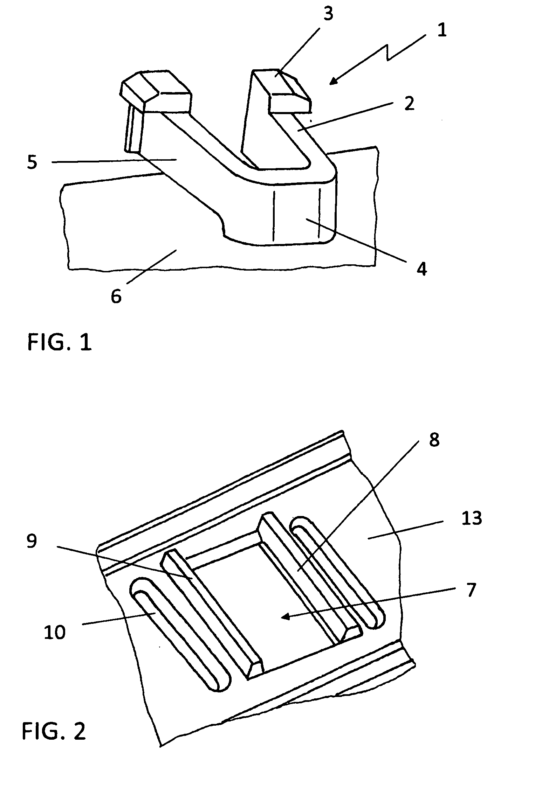

In der Figur 1 ist ein Rastelement 1 dargestellt, das in Form eines trapezförmigen Steges aus der Ebene 6 der Oberfläche eines Bauteils hervorsteht. Das Rastelement 1 ist über die Kopfseite 4 des Trapezes mit dem Bauteil verbunden, während die Schenkel 5 des Trapezes frei über der Bauteiloberfläche 6 angeordnet sind. Die Basis des Trapezes ist offen, so dass die Schenkel 5 federnd gegeneinander gedrückt werden können. An der Oberkante 2 des Rastelementes 1 sind Rasthaken 3 angeordnet.

Die Figur 2 zeigt ein Ausschnitt eines Bauteils, in dem eine zum Rastelement 1 korrespondierende Rastöffnung 7 angeordnet ist. Die Rastöffnung 7 umfasst zwei parallel verlaufende Klemmleisten 8, die sich entlang der Längsseite der Aufnahmeöffnung 7 erstrecken und die Breite der Aufnahmeöffnung 7 definieren. Auf den der Aufnahmeöffnung 7 gegenüberliegenden Seiten der Klemmleisten sind im Bauteil 13 Ausnehmungen 10 angeordnet, die ein federndes Nachgeben der brückenartig angeordneten Klemmleisten 8 erlauben.

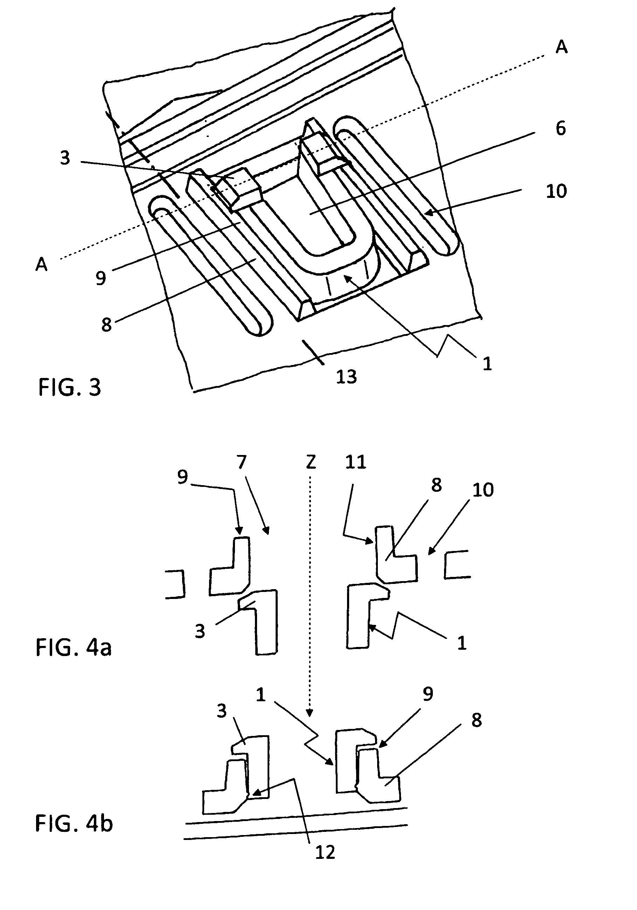

In der Figur 3 sind die beiden Einzelbauteile aus den Figuren 1 und 2 im montierten Zustand zu sehen. Dazu wurde das zu montierende erste Bauteil mit der Aufnahmeöffnung 7 von oben auf das zweite Bauteil mit dem Rastelement 1 aufgesetzt, wobei das Rastelement 1 in die Aufnahmeöffnung 7 des ersten Bauteils eingreift und die Rasthaken 3 mit den Rastkanten 9 an der Klemmleiste 8 eine Rastverbindung eingehen. Bei dieser Darstellung ist zu erkennen, dass die Schenkel 5 des Rastelementes 1 nur partiell mit den Klemmseiten der Klemmleiste 8 in Verbindung stehen, wobei die Schenkel 5 des Rastelementes 1 federnd zwischen den Klemmleisten 8 eingeklemmt sind. Sowohl die Klemmleisten 8 als auch die Schenkel 5 des Rastelementes 1 üben aufeinander eine Federkraft aus, mit der die Lage der Bauteile zueinander fixiert wird. Da das Rastelement 1 nur punktuell mit der Klemmleiste 8 in Wirkverbindung steht, ist jedoch ein nachträgliches Verschieben der Position der Bauteile zueinander ohne zu viel Kraftaufwand möglich. Durch die Aufnahmeöffnung 7 ist die Oberfläche 6 des ersten Bauteils zu erkennen. Der Rasthaken 3 liegt auf der Rastkante 9 der Klemmleiste 8 auf.

Die Figur 4a zeigt in der Schnittdarstellung eine Prinzipienzeichnung des Befestigungssystems vor der Montage. Das erste Bauteil, das als Befestigungselement die Aufnahmeöffnung 7 mit den Klemmleisten 8 umfasst, befindet sich oberhalb des zweiten Bauteils, welches das Rastelement 1 als Befestigungsvorrichtung aufweist. Bei der Montage wird das erste Bauteil mit der Aufnahmeöffnung 7 in Z-Richtung auf das zweite Bauteil mit dem Rastelement 1 aufgesetzt.

In der Figur 4b ist das Resultat der Montage ebenfalls in deiner Schnittdarstellung zu erkennen, wobei es sich um einen Schnitt entlang der Linie A-A in der Figur 3 handelt. Im Montagezustand ist das Rastelement 1 zwischen den Klemmleisten 8 eingeklemmt ist. Die Rasthaken 3 stehen mit der Rastkante 9 der Klemmleiste 8 in Wirkverbindung und verhindern ein Verschieben des Bauteils nach oben. Bei dieser Darstellung ist darüber hinaus auf der Klemmseite 11 der Klemmleiste 8 ein Klemmwulst 12 zu erkennen, auf dem das Rastelement 1 punktuell aufliegt. Durch diese punktuelle Verteilung der Federkraft soll das Verschieben der Bauteile gegeneinander erleichtert werden.

### Bezugszeichenliste

- 1: Rastelement
- 2: Oberkante (Rastelement)
- 3: Rasthaken
- 4: Kopfseite Trapez
- 5: Schenkel Trapez
- 6: Bauteiloberfläche
- 7: Aufnahmeöffnung
- 8: Klemmleiste
- 9: Rastkante (Klemmleiste)
- 10: Ausnehmung
- 11: Klemmseite
- 12: Klemmwulst
- 13: Bauteil

## Patentansprüche

1. Vorrichtung zur lagegenauen Montagepositionierung von mindestens zwei Bauteilen zueinander, wobei
- an einem ersten Bauteil mindestens ein aus der Bauteilebene (6) hervorstehendes stegförmiges, an seiner Oberkante (2) Rasthaken (3) aufweisendes Rastelement (1) in Form eines gleichschenkligen, an seiner Basis offenen Trapezes angeordnet ist, wobei das Rastelement über die Kopfseite (4) des Trapezes mit dem Bauteil verbunden ist, während die Schenkel (5) des Trapezes frei über der Bauteiloberfläche (6) angeordnet sind, und
- an einem zweiten Bauteil mindestens eine zu dem Rastelement (1) korrespondierende Aufnahmeöffnung (7) angeordnet ist,
**dadurch gekennzeichnet, dass** die Aufnahmeöffnung (7) zwei parallel verlaufende Klemmleisten (8) umfasst, zwischen die das Rastelement (1) beim Einführen in die Aufnahmeöffnung (7) mit seinen Schenkeln (5) einklemmbar ist, wobei die Schenkel (5) sowie die Klemmleisten (8) federnd angeordnet sind.

2. Vorrichtung nach Anspruch 1,
**dadurch gekennzeichnet, dass** die Bauteile in einem Spritzgussverfahren aus einem thermoplastischen Kunststoff aus der Gruppe Polypropylen (PP), Polyethylen (PE), Polyamid (PA), Polystyrol (PS), Polyvinylchlorid (PVC), Polycarbonat (PC), Polybutylenterephthalat (PBT), Polyacrylnitril (PAN), Polymethylmethacrylat (PMMA), Acrylnitril-Butadien-Styrol (ABS), Acrylnitril-Butadien-Styrol/Polycarbonat-Copolymerisat (ABS-PC), Polyphenylether (PPE), Styrol-Acrylnitril (SAN) und/oder Polyoxymethylen (POM) hergestellt sind.

3. Vorrichtung nach Anspruch 1 oder 2,
**dadurch gekennzeichnet, dass** die Klemmleisten (8) mit der an der Oberkante (2) des Rastelementes (1) angeordneten Rasthaken (3) in Wirkverbindung stehende Rastkanten (9) aufweisen.

4. Vorrichtung nach einem der Ansprüche 1 bis 3,
**dadurch gekennzeichnet, dass** die Klemmleisten (8) federnd in der Aufnahmeöffnung (7) angeordnet sind, wobei die Klemmleisten (8) sich entlang der Längsseite der Aufnahmeöffnung (7) erstrecken und wobei auf den der Aufnahmeöffnung 7 gegenüberliegenden Seiten der Klemmleisten (8) im Bauteil Ausnehmungen (10) angeordnet sind, die ein federndes Nachgeben der brückenartig angeordneten Klemmleisten (8) in diese Richtung zulassen.

5. Vorrichtung nach einem der Ansprüche 1 bis 4,
**dadurch gekennzeichnet, dass** die Klemmleiste (8) entlang ihrer zur Aufnahmeöffnung (7) weisenden Klemmseite (11) einen Klemmwulst (12) aufweist.

## Claims

1. An apparatus for the precise assembly positioning of at least two components with respect to each other, wherein
- a first component has arranged on it at least one web-shaped catch element (1) which projects from the component plane (6) and has catch hooks (3) on its upper edge (2) and which is in the form of an isosceles trapezium open at its base, wherein the catch element is connected to the component by way of the head side (4) of the trapezium, whilst the legs (5) of the trapezium are arranged free over the component surface (6), and
- at least one receiving opening (7) corresponding to the catch element (1) is provided on a second component,
**characterized in that** the receiving opening (7) comprises two clamping strips (8) which extend parallel and between which the catch element (1) is capable of being clamped with its legs (5) when inserted into the receiving opening (7), wherein the legs (5) and the clamping strips (8) are arranged in a springing manner.

2. An apparatus according to claim 1, **characterized in that** the components are produced in an injection-moulding process from a thermoplastic plastics material from the group comprising polypropylene (PP), polyethylene (PE), polyamide (PA), polystyrene (PS), polyvinyl chloride (PVC), polycarbonate (PC), polybutylene terephthalate (PBT), polyacrylonitrile (PAN), polymethyl methacrylate (PMMA), acrylonitrile butadiene styrene (ABS), acrylonitrile butadiene styrene / polycarbonate copolymerizate (ABS-PC), polyphenyl ether (PPE), styrene acrylonitrile (SAN) and/or polyoxymethylene (POM).

3. An apparatus according to claim 1 or 2, **characterized in that** the clamping strips (8) have catch edges (9) operatively connected to the catch hooks (3) arranged on the upper edge (2) of the catch element (1).

4. An apparatus according to any one of claims 1 to 3, **characterized in that** the clamping strips (8) are arranged in a springing manner in the receiving opening (7), wherein the clamping strips (8) extend along the longitudinal side of the receiving opening (7) and wherein recesses (10), which permit a springing yielding of the clamping strips (8) - arranged in the manner of a bridge - in this direction, are arranged in the component on the sides of the clamping strips (8) opposite the receiving opening 7.

5. An apparatus according to any one of claims 1 to 4, **characterized in that** the clamping strip (8) has a clamping bead (12) along its clamping side (11) facing towards the receiving opening (7).

## Revendications

1. Dispositif de montage et de positionnement précis d'au moins deux pièces de construction l'une par rapport à l'autre, dans lequel :
- une première pièce, est équipée d'au moins un élément d'encliquetage (1) en forme de barrette faisant saillie sur le plan de celle-ci (6) et muni de crochets d'encliquetage (3), sur son bord supérieur (2), cet élément d'encliquetage (1) ayant la forme d'un trapèze isocèle ouvert à sa base, et étant relié à la première pièce par la branche centrale (4) du trapèze tandis que les branches latérales (5) de celui-ci sont disposées librement sur la surface supérieure (6) de cette pièce, et
- la seconde pièce est équipé d'au moins d'une ouverture de réception (7) correspondant à l'élément d'encliquetage (1),
**caractérisé en ce que**
l'ouverture de réception (7) comporte deux baguettes de blocage (8) s'étendant parallèlement entre lesquelles l'élément d'encliquetage (1) peut être bloqué suite à l'introduction de ses branches latérales (5) dans cette ouverture de réception (7), les branches latérales (5) ainsi que les baguettes de blocage (8) étant montées élastiquement.

2. Dispositif conforme à la revendication 1,
**caractérisé en ce que**
les pièces de construction sont fabriquées par un procédé de moulage par injection en un matériau thermoplastique choisi dans le groupe formé par le polypropylène (PP), le polyéthylène (PE), le polyamide (PA), le polystyrène (PS), le chlorure de polyvinyle (PVC), le polycarbonate (PC), le poly-butylène-térephthalate (PBT), le poly-acrylonitrile (PAN), le poly-méthyl méthacrylate (PMMA), l'acrylonitrile-butadiène-styrène (ABS), le copolymère acrylonitrile-butadiène-styrène/polycarbonate (ABS-PC), le poly-phényl-éther (PTE), le styrène acrylonitrile (SAN), et/ou le poly-oxy-méthylène (POM).

3. Dispositif conforme à la revendication 1 ou 2,
**caractérisé en ce que**
les baguettes de blocage (8) comportent des bords d'encliquetage (9) coopérant avec les crochets d'encliquetage (3) situés sur le bord supérieur (2) de l'élément d'encliquetage (1).

4. Dispositif conforme à l'une des revendications 1 à 3,
**caractérisé en ce que**
les baguettes de blocage (8) sont montées élastiquement dans l'ouverture de réception (7), et s'étendent le long des côtés longitudinaux de cette ouverture (7), et des évidements (10) sont prévus sur la seconde pièce, sur les côtés des baguettes de blocage (8) situés à l'opposé de l'ouverture de réception (7), ces évidements (10) permettant un fléchissement élastique des baguettes de blocage (8) montées en pont, dans cette direction.

5. Dispositif conforme à l'une des revendications 1 à 4,
**caractérisé en ce que**
les baguettes de blocage (8) comportent un bourrelet de blocage (12) le long de leur face de blocage (11) tournée vers l'ouverture de réception (7).
